# DEMANDE DE BREVET EUROPEEN

(11) **EP 1 605 158 A2**
(43) Date de publication de la demande: **14.12.2005**
(21) Numéro de dépôt: 05300470.1
(22) Date de dépôt: 09.06.2005
(51) Int. Cl.: F02M 61/18, F02M 61/16, F02M 45/08, F02B 23/06

(54) **Piston pour un moteur à combustion interne comportant un bol qui comporte deux zones de combustion distinctes**

(30) Priorité: 10.06.2004 FR 0406266
(71) Demandeur: Renault s.a.s., 92100 Boulogne Billancourt (FR)
(72) Inventeur: Anrigo, Philippe, 94150, Rungis (FR)
(74) Mandataire: Rougemont, Bernard

(57) **Abrégé**

L'invention propose un piston (26) pour un moteur à combustion interne (10) à allumage par compression et à injection directe, comportant dans sa face supérieure (24), un bol (56) délimitant la partie inférieure d'une chambre de combustion (20), caractérisé en ce que le bol (56) comporte une première zone centrale de combustion (60) et au moins une deuxième zone périphérique de combustion (62), qui entoure la première zone centrale (60), et en ce que des moyens d'injection (44, 58) sont susceptibles, en fonction de paramètres de fonctionnement déterminés du moteur, d'injecter du carburant sélectivement vers la première zone centrale (60) et/ou au moins vers la deuxième zone (62) du bol.

## Description

L'invention propose un piston pour un moteur à combustion interne comportant un bol qui comporte deux zones de combustion distinctes et des moyens d'injection associés.

L'invention propose plus particulièrement un piston pour un moteur à combustion interne à allumage par compression et à injection directe, comportant dans sa face supérieure, un bol délimitant la partie inférieure d'une chambre de combustion.

On cherche généralement à améliorer les performances des moteurs de véhicules automobiles tout en réduisant d'une part leur consommation et, d'autre part, l'émission de polluants, tels que les particules.

De telles améliorations peuvent notamment être obtenues en agissant sur la qualité du mélange entre les gaz d'admission et le carburant, en particulier en réalisant un mélange sensiblement homogène.

Dans le cas d'un moteur à injection directe, les phénomènes principaux qui se combinent et qui permettent d'obtenir un mélange sensiblement homogène sont essentiellement la pulvérisation du carburant et les mouvements d'air au milieu de la charge des gaz d'admission et ceux provoqués par l'injection du carburant.

Afin d'améliorer la pulvérisation du carburant en de fines gouttelettes, il est notamment connu d'augmenter la pression d'injection dans les injecteurs et de diminuer le diamètre des trous du nez ou buse d'injection. Il est alors nécessaire d'augmenter en conséquence le nombre de trous de la buse d'injection afin d'injecter autant de carburant qu'auparavant, ce qui provoque du fait de l'action des mouvements d'air, des problèmes de recouvrement ou d'interférence entre les jets de carburant injecté par les trous de la buse.

Tout ceci permet néanmoins d'obtenir un meilleur mélange des gaz d'admission avec le carburant injecté, et donc une réduction de la formation des hydrocarbures imbrûlés et une augmentation des performances du moteur.

On cherche aussi parallèlement à améliorer les chambres de combustion des moteurs et plus particulièrement à optimiser la géométrie du bol de la face supérieure de chaque piston.

On distingue ainsi principalement deux catégories de bols utilisés dans les moteurs à combustion du type à allumage par compression et à injection directe.

Une première catégorie de bols de combustion, généralement dits "à bol large", est par exemple décrite dans le document EP-A1-0849448.

Cette première catégorie de bols regroupe l'ensemble des bols de rayon élevé et de faible profondeur. Ces bols larges sont associés avec des injecteurs qui produisent des jets fortement inclinés par rapport à l'axe du piston.

Cette catégorie de bols permet de former des jets de grande longueur, en améliorant ainsi le mélange des gaz d'admission avec le carburant injecté.

Cependant, lorsque le moteur fonctionne à hauts régimes, c'est-à-dire à fortes charges, les gaz d'admission dévient les jets vers l'extérieur du bol et le plus grand rayon du bol est limité par les dimensions du piston et la présence de porte-segments et de galeries d'huile.

Une deuxième catégorie de bols de combustion, généralement dits "à bol profond", est par exemple décrite dans les documents FR-A-2.756.589 ou U5-5.337.714.

Cette deuxième catégorie de bols regroupe les bols de rayon plus faible et de profondeur plus importante. Ces bols profonds sont associés avec des injecteurs qui produisent des jets faiblement inclinés par rapport à l'axe du piston.

Un bol de cette catégorie permet de conserver le mélange des gaz d'admission avec le carburant à l'intérieur du bol, quel que soit le régime de fonctionnement du moteur. Cependant, puisqu'une faible proportion des gaz d'admission pénètre à l'intérieur du bol, leur mélange avec le carburant est de moins bonne qualité.

Chacune des deux catégories de bols permet, en fonction du régime du moteur, d'améliorer la combustion et donc les performances du moteur, tout en réduisant l'émission de polluants.

Les moteurs à allumage par compression du type Diesel fonctionnent généralement dans toutes les zones ou plages de fonctionnement du moteur avec une combustion utilisant un mélange gaz-gazole du type hétérogène, c'est à dire que les gaz d'admission et le gazole sont répartis inégalement dans la chambre de combustion.

Or ce mode de fonctionnement, dit combustion hétérogène ou conventionnelle, est aussi à la source des émissions de fumées et des émissions d'oxydes d'azote, ou NOx.

Une combustion du type homogène, c'est-à-dire dans laquelle les gaz d'admission et le gazole sont répartis de manière uniforme dans la chambre de combustion, évite les émissions de fumée et diminue de manière importante les émissions de NOx, tout en conservant un rendement proche de la combustion du type hétérogène.

Pour qu'un moteur puisse fonctionner en mode homogène, il est généralement nécessaire de mettre en oeuvre des moyens d'aide à la vaporisation du gazole et à la formation d'un mélange air-gazole homogène.

Ces moyens sont par exemple le réchauffage de l'air d'admission, l'utilisation de plusieurs injecteurs de carburant, un carburant plus volatile, etc ...

De tels moyens nécessitent donc des artifices coûteux, et de surcroît, ne permettent pas d'obtenir un fonctionnement du moteur en mode hétérogène qui est pourtant requis pour obtenir des performances suffisantes lorsque le moteur fonctionne à pleines ou fortes charges.

Par conséquent, les conceptions actuelles des moteurs, et plus particulièrement des bols de combustion des pistons, ne permettent pas d'améliorer de manière satisfaisante les performances des moteurs à allumage par compression et à injection directe de manière satisfaisante.

L'invention a pour but de proposer un piston pour un moteur à combustion interne qui comporte un bol dont la conception permet notamment d'améliorer le comportement du moteur tout en réduisant les émissions polluantes, et cela quelle que soit la plage de régimes du moteur.

Dans ce but, l'invention propose un piston pour un moteur à combustion interne du type décrit précédemment, caractérisé en ce que le bol comporte une première zone centrale de combustion et au moins une deuxième zone périphérique de combustion, qui entoure la première zone centrale, et en ce que des moyens d'injection sont susceptibles, en fonction de paramètres de fonctionnement déterminés du moteur, d'injecter du carburant sélectivement vers la première zone centrale et/ou au moins vers la deuxième zone du bol.

Grâce à l'invention, on commande sélectivement les moyens d'injection associés aux zones centrale et périphérique du bol du piston de manière à faire fonctionner le moteur en combustion de type hétérogène et/ou en combustion de type homogène en fonction des applications et notamment de la charge du moteur.

Avantageusement, on améliore ainsi les performances du moteur sur l'ensemble de la plage du fonctionnement et on réduit, en optimisant l'injection du carburant, la consommation et l'émission de polluants.

Selon d'autres caractéristiques de l'invention :
- la première zone centrale de combustion et la deuxième zone périphérique de combustion forment respectivement une première cavité centrale et une deuxième cavité périphérique présentant chacune une profondeur moyenne P par rapport à la face supérieure du piston telle que la profondeur moyenne P1 de la première cavité centrale soit supérieure à la profondeur moyenne P2 de la deuxième cavité ;
- la première cavité centrale et/ou la deuxième cavité comporte un contour supérieur globalement circulaire ;
- la première cavité centrale et la deuxième cavité sont co-axiales ;
- la première cavité centrale et la deuxième cavité sont centrées sur l'axe X-X des moyens d'injection ;
- le piston est pour un moteur du type dans lequel les moyens d'injection injectent le carburant sous la forme de jets formant une nappe d'injection dont l'angle d'inclinaison au sommet est défini par l'axe principal du jet et l'axe X-X des moyens d'injection, le carburant est injecté sous la forme d'une première nappe d'injection présentant un angle aigu d'inclinaison (α₁) déterminé en fonction de la première zone centrale ;
- le carburant est injecté sous la forme d'une deuxième nappe d'injection présentant un angle aigu d'inclinaison (α₂) supérieur à l'angle (α₁) et déterminé au moins en fonction de la deuxième zone périphérique ;
- les moyens d'injection comportent au moins un injecteur dont l'extrémité axiale interne formant une buse d'injection comporte une pluralité de trous agencés annulairement selon au moins deux rangées décalées axialement de manière à injecter le carburant respectivement sous la forme d'une première nappe d'injection d'angle d'inclinaison (α₁) et/ou d'une deuxième nappe d'injection d'angle d'inclinaison (α₂) ;
- l'axe principal de l'injecteur à nappe d'injection variable est sensiblement coaxial à l'axe du bol ;
- les moyens d'injection sont commandés sélectivement pour injecter du carburant dans la première cavité centrale lorsque le moteur fonctionne à faibles ou moyennes charges de manière à obtenir notamment une combustion de type hétérogène ou homogène selon les applications ;
- les moyens d'injection sont commandés sélectivement pour injecter du carburant dans la deuxième cavité lorsque le moteur fonctionne à fortes charges de manière à obtenir notamment une combustion de type hétérogène ;
- le moteur comporte des moyens pour produire à l'admission un mouvement tourbillonnaire ordonné du type « swirl ».

D'autres caractéristiques et avantages de l'invention apparaîtront à la lecture de la description détaillée qui suit pour la compréhension de laquelle on se reportera aux figures annexées parmi lesqueiles :
- la figure 1 est une vue schématique partielle en coupe axiale d'une partie d'un moteur à combustion interne comportant un bol de combustion et des moyens d'injection conformes aux enseignements de l'invention ;
- la figure 2 est un graphique représentant de manière schématique l'évolution du couple en fonction du régime d'un moteur fonctionnant en mode de combustion hétérogène sur l'ensemble de sa plage de fonctionnement ;
- les figures 3 et 4 sont des vues de détail, d'un moteur selon l'invention fonctionnant selon la figure 2, qui représentent la buse de l'injecteur et le bol et qui illustrent l'injection de carburant sélectivement dans la première cavité centrale, notamment à faibles charges, et/ou dans la deuxième cavité, notamment à fortes charges de manière à optimiser le fonctionnement en fonction du mouvement aérodynamique ordonné d'air du type « swirl » ;
- la figure 5 est un graphique analogue à celui de la figure 2 représentant de manière schématique l'évolution du couple en fonction du régime d'un moteur fonctionnant en mode de combustion « mixte », c'est-à-dire soit en combustion hétérogène, soit en combustion homogène ;
- les figures 6 à 8 sont des vues de détail qui représentent la buse d'injection et le bol de combustion du piston et qui illustrent la mise en oeuvre de l'invention à un moteur fonctionnant selon la figure 5, dans lequel le carburant est injecté sélectivement dans la première cavité centrale et/ou dans la deuxième cavité de manière à réaliser en fonction de paramètres déterminés une combustion du type hétérogène ou du type homogène.

Dans la description et les revendications, on utilisera à titre non limitatif les expressions telles que supérieur et inférieur et les orientations « axiale » et « radiale » en référence aux figures et définitions données dans la description.

De plus, les éléments identiques, similaires ou analogues de l'invention seront désignés par les mêmes chiffres de référence.

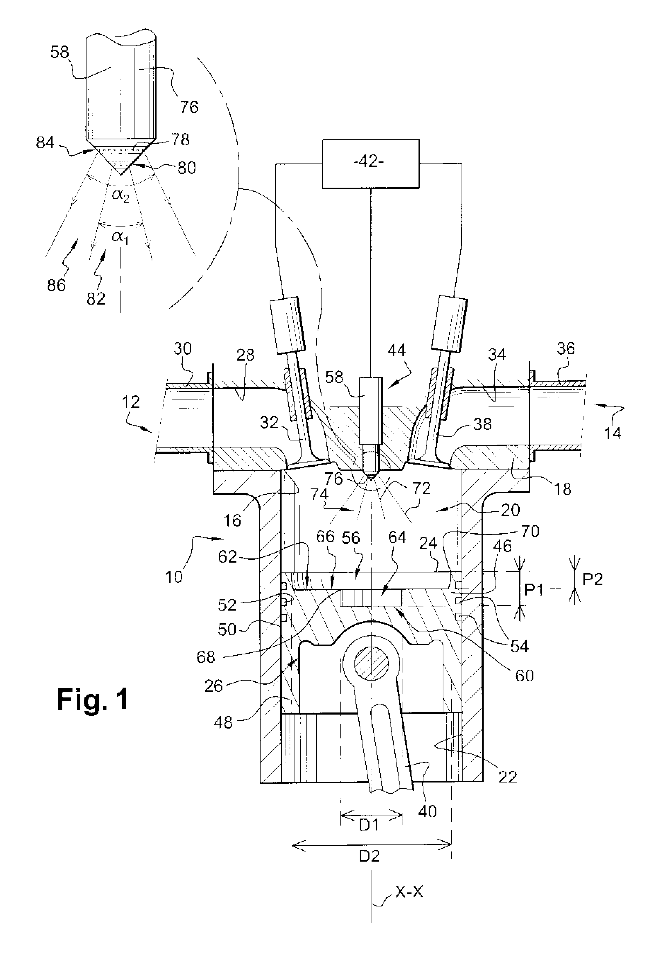

On a représenté à la figure 1, un moteur à combustion interne 10 du type à allumage par compression et à injection directe, qui est ici un moteur Diesel.

Le moteur à combustion interne 10 comporte un circuit d'admission 12 et un circuit d'échappement 14 de gaz brûlés qui communiquent par la face inférieure 16 d'une culasse 18 avec au moins une chambre de combustion 20 d'un cylindre 22.

Le circuit d'admission 12 permet notamment d'introduire dans chaque chambre de combustion 20 de l'air frais provenant de l'atmosphère.

De manière connue, la chambre de combustion 20 est délimitée axialement, d'une part dans sa partie inférieure par la face supérieure 24 d'un piston 26 qui coulisse dans le cylindre 22 selon un mouvement alternatif de va-et-vient et, d'autre part, dans sa partie supérieure par une portion de la face inférieure 16 de la culasse 18 du moteur 10.

La culasse 18 comporte pour chaque cylindre 22 du moteur 10 au moins un conduit d'admission 28 qui est relié à l'une de ses extrémités à un collecteur d'admission 30 et qui débouche à l'autre de ses extrémités dans la chambre de combustion 20 avec interposition d'au moins une soupape d'admission 32.

Le circuit d'échappement 14, qui est ici agencé en vis-à-vis du collecteur d'admission 12, permet d'évacuer les gaz d'échappement qui sont expulsés de la chambre de combustion 20 par le piston 26 du moteur 10.

Pour ce faire, la culasse 18 comporte pour chaque cylindre au moins un conduit d'échappement 34 qui est relié à l'une de ses extrémités à un collecteur d'échappement 36 et qui débouche à l'autre de ses extrémités dans la chambre de combustion 20 avec interposition d'au moins une soupape d'échappement 38.

Le collecteur d'échappement 36 évacue généralement les gaz d'échappement vers une tubulure d'échappement (non représentée) comportant avantageusement un dispositif de traitement des gaz, tel qu'un filtre à particules ou un piège à oxydes d'azote, de manière à diminuer la quantité de substances polluantes rejetée dans l'atmosphère.

Dans la partie inférieure du cylindre 22, une bielle 40 relie le piston 26 à un vilebrequin (non représenté).

Les soupapes d'admission 32 et d'échappement 38 sont par exemple commandées par des actionneurs (non représentés) pilotés de préférence par une unité électronique de commande 42.

Avantageusement, l'unité électronique de commande 42 commande aussi des moyens d'injection directe 44 du carburant, ici du gazole, dans la chambre de combustion 22.

Une telle unité électronique de commande 42 est susceptible de comporter des moyens de mémorisation d'une ou plusieurs cartographies de fonctionnement du moteur 10 et de recevoir des signaux représentatifs de paramètres de fonctionnement tels que le régime du moteur.

Le piston 26 comporte ici plus précisément une tête supérieure 46 et une jupe inférieure 48. La paroi cylindrique externe 50 de la tête 46 comporte des gorges annulaires périphériques 52 qui reçoivent des segments 54.

Le piston 26 comporte dans sa face supérieure 24 un bol de combustion 56 qui délimite la partie inférieure de la chambre de combustion 20.

Les moyens d'injection directe 44 du moteur 10 comportent au moins un injecteur 58 susceptible d'injecter le carburant vers le bol de combustion 56 du piston 26 et avantageusement à une pression élevée de manière que le carburant injecté soit pulvérisé sous la forme de gouttelettes de dimensions les plus petites possibles.

Conformément à l'invention, le bol 56 comporte une première zone centrale 60 de combustion et au moins une deuxième zone périphérique 62 de combustion qui entoure radialement la première zone centrale 60 et les moyens d'injection 44 sont susceptibles, en fonction de paramètres de fonctionnement déterminés du moteur 10, d'injecter du carburant sélectivement vers la première zone centrale 60 et/ou au moins vers la deuxième zone 62 du bol 56.

La première zone centrale 60 présente une cote radiale moyenne D1 qui est inférieure à la cote radiale moyenne D2 de la deuxième zone périphérique 62.

Dans l'exemple de réalisation illustré à la figure 1, la première zone centrale de combustion 60 et la deuxième zone périphérique de combustion 62 forment respectivement une première cavité annulaire centrale 64 et une deuxième cavité annulaire périphérique 66 présentant chacune une profondeur moyenne P par rapport à la face supérieure 24 du piston 26 telle que la profondeur P1 de la première cavité centrale 64 est supérieure à la profondeur P2 de la deuxième cavité 66.

La première cavité centrale 64 et la deuxième cavité 66 comportent un contour supérieur 68 globalement circulaire de diamètre D1 et un contour supérieur 70 de diamètre D2 respectivement.

La première cavité centrale 64 et la deuxième cavité 66 sont ici concentriques, c'est-à-dire co-axiales, et sont centrées sur l'axe X-X des moyens d'injection 44.

Les moyens d'injection 44 injectent le carburant sous la forme d'un ou plusieurs jets 72 formant une nappe conique d'injection 74 dont l'angle d'inclinaison (αᵢ) au sommet est défini par l'axe principal du jet 72 et l'axe X-X des moyens d'injection 44.

Les moyens d'injection 44 comportent au moins un injecteur 58 dont l'extrémité axiale interne formant une buse d'injection 76 comporte une pluralité de trous 78.

Les trous d'injection 78 sont de préférence agencés annulairement selon au moins deux rangées décalées axialement et l'injection du carburant commandée par l'unité électronique de commande 42 est réalisée sélectivement par l'une et/ou l'autre des rangées de manière à injecter plus ou moins de carburant et avec des angles d'inclinaison (αᵢ) différents.

Comme on peut le voir à la figure 1 sur l'agrandissement de la buse d'injection 76, le carburant est susceptible d'être injecté par la rangée inférieure 80 de trous 78 sous la forme d'une première nappe d'injection 82 présentant un premier angle aigu d'inclinaison (α₁) et/ou par la rangée supérieure 84 de trous 78 sous la forme d'une deuxième nappe d'injection 86 présentant un deuxième angle aigu d'inclinaison (α₂).

L'axe principal de l'injecteur 58 à nappe conique d'injection d'angle d'inclinaison variable est ici sensiblement coaxial à l'axe du bol 56.

Bien entendu, les moyens d'injection 44 peuvent être agencés selon les applications et les différentes géométries possibles des cavités du bol 56 de manière que l'axe principal de l'injecteur 58 soit convergent ou divergent avec l'axe du bol 56.

Le carburant est ainsi susceptible d'être injecté selon la première nappe conique d'injection 82 avec un angle d'inclinaison (α₁) qui est déterminé en fonction des paramètres de la première zone ou cavité centrale 64, notamment en fonction du diamètre D1 et de la profondeur P1.

De manière analogue, le carburant est susceptible d'être injecté selon la deuxième nappe conique d'injection 86 avec un angle aigu d'inclinaison (α₂) supérieur à l'angle (α₁) et qui est notamment déterminé en fonction du diamètre D2 et de la profondeur P2 de la deuxième zone ou cavité périphérique.

Les moyens d'injection 44 sont donc commandés par l'unité électronique de commande 42 de manière à injecter du carburant sélectivement dans la première cavité centrale 64 et/ou dans la deuxième cavité 66 en fonction de paramètres de fonctionnement déterminés, notamment de la charge du moteur, pour réaliser une combustion de type hétérogène ou homogène et obtenir des performances optimales.

Le fonctionnement d'un moteur 10 comportant au moins un piston 26 ayant un bol de combustion 56 et des moyens d'injection 44 sera mieux compris à la lecture de la description qui va suivre d'un premier et d'un deuxième exemple d'application des enseignements de l'invention qui sont donnés uniquement à titre d'exemple non limitatif.

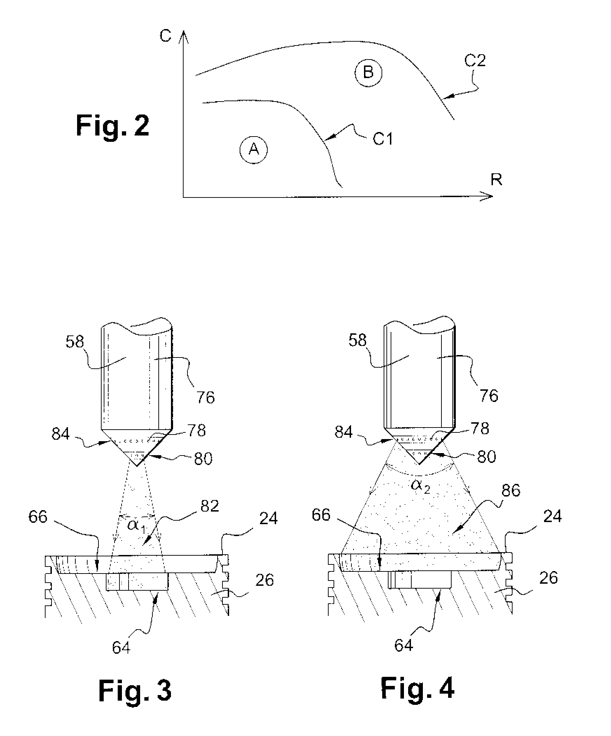

Dans le premier exemple de mise en oeuvre de l'invention, le moteur 10 est du type qui fonctionne en mode hétérogène sur l'ensemble de la plage de fonctionnement illustrée à la figure 2.

Le moteur 10 comporte avantageusement des moyens pour produire à l'admission un mouvement tourbillonnaire ordonné dans l'air, en particulier un mouvement du type « swirl ».

De tels moyens, non représentés, sont par exemple constitués par la géométrie des conduits d'admission 28 du type « hélicoïdal » ou « tangentiel » qui permettent d'obtenir un mouvement de « swirl » à l'admission et dont il faut tenir compte comme d'une manière générale la forme de la culasse 18, des ouvertures et fermetures des soupapes d'admission 32 et d'échappement 38, de la position et de l'orientation de l'injecteur 58.

Comme on peut le voir sur la figure 2, on distingue pour un tel moteur 10 d'une part une première plage de fonctionnement « A », dite plage à fort « swirl », qui est située en deçà de la première courbe C1 représentant l'évolution du couple C en fonction du régime R à faibles charges et, d'autre part, une deuxième plage de fonctionnement « B », dite de plage à faible « swirl », qui est située au dessus de la première courbe C1 et en en deçà d'une deuxième courbe C2 représentant l'évolution du couple C en fonction du régime R à fortes charges.

Ainsi lorsque le moteur 10 est dans la plage de fonctionnement « A » suivant la courbe C1, c'est-à-dire lorsqu'il fonctionne à faibles ou moyennes charges, le carburant est conformément à l'invention, injecté uniquement par la rangée inférieure 80 de trous 78 de la buse 76 de l'injecteur 58 vers la cavité centrale 64.

Comme l'illustre la figure 3, l'injection de carburant est alors réalisée suivant la première nappe d'injection 82 dont l'angle aigu d'inclinaison (α₁) est déterminé de manière à injecter le carburant dans la première cavité centrale 64.

En effet, la première cavité centrale 64 étant de faible diamètre D1 par comparaison notamment au diamètre D2 de la deuxième cavité et présentant une profondeur P1 supérieure à la profondeur P2, le mouvement de « swirl » y est nettement plus important, principalement au cours de la phase de compression.

De manière analogue, lorsque le moteur 10 est dans la plage de fonctionnement « B » suivant la courbe C2, c'est-à-dire lorsqu'il fonctionne à fortes charges, le carburant est alors de préférence injecté uniquement par la rangée supérieure 84 de trous 78 de la buse 76 de l'injecteur 58 vers la deuxième cavité 66.

Par conséquent et comme illustrée à la figure 4, l'injection de carburant est réalisée suivant la deuxième nappe d'injection 86 présentant un angle d'inclinaison (α₂) et essentiellement dans la deuxième cavité 66 dans laquelle le mouvement de « swirl » est faible, voire quasi nul du fait de son grand diamètre D2 et de sa faible profondeur P2.

Ainsi qu'on l'aura compris et conformément à l'invention, l'injection de carburant est susceptible d'être effectuée sélectivement par les moyens d'injection 44 commandés, notamment en fonction de la charge du moteur, dans la première cavité centrale 64 ou dans la cavité périphérique 66 de manière à améliorer sur l'ensemble de la plage de fonctionnement du moteur les performances du moteur.

Avantageusement, l'injection est réalisée pour un moteur donné selon une ou plusieurs cartographies de fonctionnement intégrées à l'unité électronique de commande 42.

Bien entendu, l'injection du carburant peut aussi être réalisée simultanément par les rangées supérieure 84 et inférieure 80 de trous 78 suivant les première et deuxième nappes d'injection 82, 86 respectivement dans chacune des cavités de combustion 64, 66, notamment lorsque le moteur est dans une plage de fonctionnement intermédiaire entre les plages « A » et « B ».

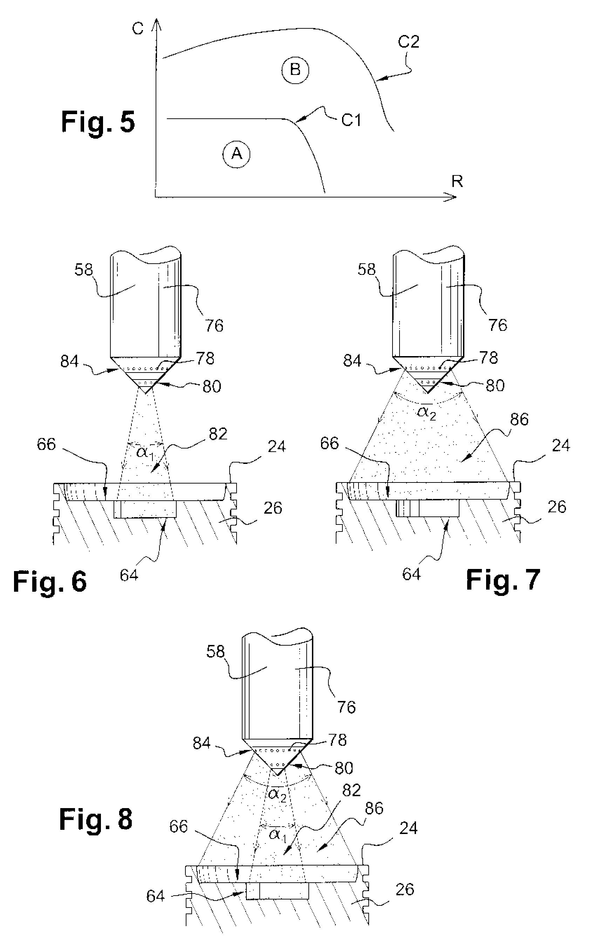

Dans le deuxième exemple de mise en oeuvre de l'invention, le moteur 10 fonctionne en mode de combustion dit « mixte », c'est-à-dire qu'il est susceptible de fonctionner en combustion hétérogène ou en combustion homogène en fonction de la plage de fonctionnement dans laquelle on se situe et qui est illustrée schématiquement à la figure 5.

Comme on peut le voir à la figure 5, on distingue pour un tel moteur 10 d'une part une première plage de fonctionnement « A », dite de faibles ou moyenne charges, qui est située en deçà de la première courbe C1 représentant l'évolution du couple C en fonction du régime R et, d'autre part, une deuxième plage de fonctionnement « B », dite de fortes charges plage, qui est située au dessus de la première courbe C1 et en en deçà d'une deuxième courbe C2 représentant aussi l'évolution du couple C en fonction du régime R.

Ainsi lorsque le moteur 10 est dans la plage de fonctionnement « A », c'est-à-dire qu'il fonctionne à faibles charges, le carburant est alors injecté de préférence uniquement vers la première cavité centrale 64 par l'intermédiaire de la rangée inférieure 80 de trous 78 de la buse 76 de l'injecteur 58.

Comme l'illustre la figure 6, l'injection de carburant s'effectue alors suivant la première nappe d'injection 82 dont l'angle d'inclinaison (α₁) est déterminé afin que le carburant soit injecté essentiellement dans la première cavité centrale 64 et de manière à obtenir une combustion de type homogène.

On obtient alors des performances du moteur optimales dans les plages de fonctionnement pour lequel la combustion homogène est plus avantageuse et appropriée que la combustion hétérogène.

Toutefois, lorsque le moteur 10 est dans la plage de fonctionnement « B » suivant la courbe C2, c'est-à-dire lorsqu'il fonctionne à pleine ou à fortes charges, le carburant est alors préférentiellement injecté par la rangée supérieure 84 de trous 78 de la buse 76 de l'injecteur 58 vers la deuxième cavité périphérique 66 de manière à réaliser une combustion hétérogène.

Néanmoins, lorsque le moteur 10 est dans la plage de fonctionnement « B » suivant la courbe C2 correspondant à des régimes faibles, l'injection de carburant est alors avantageusement réalisée dans la première cavité centrale 64 et comme illustré à la figure 6 pour réaliser une combustion homogène.

Par conséquent, suivant la courbe C2 illustrant des couples C de fonctionnement supérieurs à ceux de la courbe C1, l'injection de carburant est de préférence, à faibles régimes, réalisée dans la première cavité centrale 64 suivant la première nappe d'injection 82 d'angle d'inclinaison (α₁), et à des régimes élevés dans la deuxième cavité 66 de plus grand diamètre D2 et de plus faible profondeur P2 suivant la deuxième nappe d'injection 86 d'angle d'inclinaison (α₂).

Grâce à l'invention, l'injection du carburant est réalisée sélectivement en fonction de la plage de fonctionnement.

Plus particulièrement à fortes charges, c'est-à-dire pour un couple et un régime élevés, l'injection est effectuée essentiellement dans la deuxième cavité 66 de manière à obtenir pour de tels couples et régimes, une combustion de type hétérogène pour laquelle les performances du moteur 10 sont optimales.

Cependant et comme illustré à la figure 8, l'injection du carburant n'est pas nécessairement réalisée exclusivement dans l'une ou l'autre des première et deuxième cavités 64, 66 mais peut aussi être effectuée simultanément dans l'une et l'autre, notamment dans la plage transitoire entre les faibles et les fortes charges.

Ainsi, pour les hauts régimes suivant la courbe C1 de couple inférieur, il est possible, dans des conditions de fonctionnement déterminées, d'injecter du carburant dans la première cavité centrale 64 mais aussi dans la deuxième cavité périphérique 66 en utilisant simultanément la rangée supérieure 84 et la rangée inférieure 80 de trous 78 de la buse d'injection 76.

Réciproquement, à moyens régimes suivant la courbe C2 de couple supérieur, il est possible d'injecter du carburant dans la première cavité centrale 64 ainsi que dans la deuxième cavité périphérique 66.

Bien entendu, le bol du piston peut comporter plus de deux zones de combustion et les moyens d'injection sont alors susceptibles d'injecter du carburant sélectivement du carburant dans chacune des zones selon une nappe d'injection déterminée dont l'angle d'inclinaison est notamment fonction des caractéristiques telles que la côte radiale et/ou axiale (profondeur) de chacune des différentes zones formant ou non des cavités.

Bien entendu, le bol de combustion représenté à la figure 1 ne constitue qu'un exemple non limitatif de réalisation d'un bol comportant deux zones de combustion différenciées et associées à des nappes d'injection déterminées de sorte que d'autres géométries de cavités, notamment non circulaires, sont envisageables en fonction de l'application et du moteur 10.

Avantageusement, la première cavité centrale 64 comporte un bossage ou téton central du type de celui décrit par exemple dans les documents FR-A-2.756.589 ou FR-A-2.801.935 de manière à augmenter l'effet de « swirl » ou mouvement tourbillonnaire de l'air dans la cavité 64.

Le mélange du carburant avec les gaz d'admission dans une telle cavité centrale du bol est amélioré en injectant le carburant sensiblement tangentiellement à la paroi du bossage central, pour que le carburant parcourre une distance la plus importante possible dans la cavité centrale, le long de laquelle le carburant est apte à venir en contact avec une plus grande proportion des gaz d'admission.

Avantageusement, le contour 68 de la cavité périphérique 66 s'étend radialement vers l'intérieur au-delà de la paroi annulaire verticale délimitant la cavité 66 de manière à réaliser une cavité dite « à profil réentrant ».

De préférence, le moteur à combustion interne 10 selon l'invention est équipé de dispositifs d'injection à rampe commune, aussi appelés « common rail », afin d'améliorer les performances du moteur.

Un tel dispositif d'injection (non représenté) permet notamment de contrôler avec une plus grande précision la pression et le débit des jets 72 de carburant pulvérisés par l'injecteur 58 dans la chambre de combustion 20 afin que le rendement du moteur 10 soit le meilleur possible tout en réduisant les émissions de gaz polluants.

En variante, les moyens d'injection 44 sont constitués par au moins deux injecteurs associés respectivement à chacune des zones du bol et qui sont chacun susceptible d'injecter le carburant selon une nappe d'injection présentant un angle d'inclinaison donné.

Bien entendu, les moteurs comportant des pistons 26 selon l'invention peuvent comporter plusieurs cylindres 22 et plusieurs soupapes d'admission 32 et/ou d'échappement 38 par cylindre 22, lesdites soupapes 32, 38 étant par exemple commandées individuellement par un dispositif de distribution variable.

## Revendications

1. Piston (26) pour un moteur à combustion interne (10) à allumage par compression et à injection directe, comportant dans sa face supérieure (24), un bol (56) délimitant la partie inférieure d'une chambre de combustion (20),
**caractérisé en ce que** le bol (56) comporte une première zone centrale de combustion (60) et au moins une deuxième zone périphérique de combustion (62), qui entoure la première zone centrale (60), et **en ce que** des moyens d'injection (44, 58) sont susceptibles, en fonction de paramètres de fonctionnement déterminés du moteur, d'injecter du carburant sélectivement vers la première zone centrale (60) et/ou au moins vers la deuxième zone (62) du bol.

2. Piston (26) selon la revendication 1, **caractérisé en ce que** la première zone centrale de combustion (60) et la deuxième zone périphérique de combustion (62) forment respectivement une première cavité centrale (64) et une deuxième cavité périphérique (66) présentant chacune une profondeur moyenne (P) par rapport à la face supérieure du piston telle que la profondeur moyenne (P1) de la première cavité centrale (64) soit supérieure à la profondeur moyenne (P2) de la deuxième cavité (66).

3. Piston (26) selon la revendication 2, **caractérisé en ce que** la première cavité centrale (64) et/ou la deuxième cavité (66) comporte un contour supérieur (68, 70) globalement circulaire.

4. Piston (26) selon la revendication 3, **caractérisé en ce que** la première cavité centrale (64) et la deuxième cavité (66) sont co-axiales.

5. Piston (26) selon la revendication 4, **caractérisé en ce que** la première cavité centrale (64) et la deuxième cavité (66) sont centrées sur l'axe X-X des moyens d'injection (44).

6. Moteur à combustion interne (10) du type comportant un piston (26) selon l'une quelconque des revendications 1 à 5 et du type dans lequel les moyens d'injection (44) injectent le carburant sous la forme de jets (72) formant une nappe d'injection (74) dont l'angle d'inclinaison au sommet est défini par l'axe principal du jet (72) et l'axe X-X des moyens d'injection (44), **caractérisé en ce que** le carburant est injecté sous la forme d'une première nappe d'injection (82) présentant un angle aigu d'inclinaison (α₁) déterminé en fonction de la première zone centrale (60).

7. Moteur (10) selon la revendication 6, **caractérisé en ce que** le carburant est injecté sous la forme d'une deuxième nappe d'injection (86) présentant un angle aigu d'inclinaison (α₂) supérieur à l'angle (α₁) et déterminé au moins en fonction de la deuxième zone périphérique (62).

8. Moteur (10) selon l'une des revendications 6 ou 7, **caractérisé en ce que** les moyens d'injection (44) comportent au moins un injecteur (58) dont l'extrémité axiale interne formant une buse d'injection (76) comporte une pluralité de trous (78) agencés annulairement selon au moins deux rangées (80, 84) décalées axialement de manière à injecter le carburant respectivement sous la forme d'une première nappe d'injection (82) d'angle d'inclinaison (α₁) et/ou d'une deuxième nappe d'injection (86) d'angle d'inclinaison (α₂).

9. Moteur (10) selon la revendication 8, **caractérisé en ce que** l'axe principal de l'injecteur (58) à nappe d'injection variable est sensiblement coaxial à l'axe du bol (56).

10. Moteur (10) selon l'une des revendications 6 à 9, **caractérisé en ce que** les moyens d'injection (44, 58) sont commandés sélectivement pour injecter du carburant dans la première cavité centrale (60) lorsque le moteur fonctionne à faibles ou moyennes charges de manière à obtenir notamment une combustion de type hétérogène ou homogène selon les applications.

11. Moteur (10) selon l'une des revendications 6 à 10, **caractérisé en ce que** les moyens d'injection (44, 58) sont commandés sélectivement pour injecter du carburant dans la deuxième cavité (66) lorsque le moteur fonctionne à fortes charges de manière à obtenir notamment une combustion de type hétérogène.

12. Moteur (10) selon l'une quelconques des revendications 6 à 11, **caractérisé en ce qu'**il comporte des moyens pour produire à l'admission un mouvement tourbillonnaire ordonné du type « swirl ».
